## Europäisches Patentamt

(19) **European Patent Office**

**Office européen des brevets**

(11) Veröffentlichungsnummer: **0 144 583**

**B1**

(12) # EUROPÄISCHE PATENTSCHRIFT

(45) Veröffentlichungstag der Patentschrift:
10.05.89

(51) Int. Cl.⁴: **H 04 L 11/00**

(21) Anmeldenummer: **84111474.7**

(22) Anmeldetag: **26.09.84**

(54) **Verfahren zum Übertragen von bezüglich der Dauer des Bestehens einer Verbindung ermittelten Angaben.**

(30) Priorität: **29.09.83 DE 3335344**

(43) Veröffentlichungstag der Anmeldung:
**19.06.85 Patentblatt 85/25**

(45) Bekanntmachung des Hinweises auf die Patenterteilung:
**10.05.89 Patentblatt 89/19**

(84) Benannte Vertragsstaaten:
**AT CH DE IT LI NL SE**

(56) Entgegenhaltungen:
**EP-A-0 068 310**

**CCITT, livre jaune, Tome VIII-Fascicule VIII.2, Avis X.1 à X.29, Avis X.21, Seiten 63,66, Union Internationale des Télécommunications, 1981, Genève, CH**
**NACHRICHTEN ELEKTRONIK, Band 33, Nr. 8, August 1979, Seiten 255-259; H. BUBBER: "EDS - das Durchschaltevermittlungssystem im integrierten Fernschreib- und Datennetz der Deutschen Bundespost"**

(73) Patentinhaber: **Siemens Aktiengesellschaft Berlin und München, Wittelsbacherplatz 2, D-8000 München 2 (DE)**

(72) Erfinder: **Franz, Dietmar, Ing. (grad), Edelweissstrasse 66, D-8039 Puchheim (DE)**
Erfinder: **Torggler, Norbert, Dipl.- Ing., Bellizonastrasse 7, D-8000 Müncen 71 (DE)**

**Beschreibung**

Die Erfindung bezieht sich auf ein Verfahren zum Übertragen von in einer Fernschreib- und Datenvermittlungsanlage bezüglich der Dauer des Bestehens einer Verbindung ermittelten Angaben zu der an dieser Verbindung beteiligten rufenden Teilnehmereinrichtung hin, von der der Aufbau dieser Verbindung ausgeht und die mit der an dieser Verbindung beteiligten gerufenen, Datensignale mit einer gegenüber der rufenden Teilnehmereinrichtung verschiedenen Datenübertragungsprozedur abgebenden bzw. aufnehmenden Teilnehmereinrichtung über einen an der Fernschreib- und Datenvermittlungsanlege angeschlossenen Signalumsetzer dadurch verbunden wird, daß zunächst im Zuge einer zwischen der rufenden Teilnehmereinrichtung und dem Signalumsetzen bestehenden ersten Teilverbindung die zu übertragenden Datensignale in diesem Signalumsetzer eingespeichert werden und daß anschließend nach einer Umsetzung die in dem Signalumsetzer gespeicherten Datensignale von diesem im Zuge einer zweiten Teilverbindung über die Fernschreib- und Datenvermittlungsanlage an die gerufene Teilnehmereinrichtung weitergeleitet werden, wobei die Einbeziehung des Signalumsetzers in die betreffende Verbindung von der Fernschreib- und Datenvermittlungsanlage auf ein von der rufenden Teilnehmereinrichtung abgegebenes Steuersignal hin bewirkt wird.

Es ist bereits ein Verfahren zum Ermitteln der Dauer des Bestehens einer Verbindung zwischen Datensignale mit voneinander verschiedenen Datenübertragungsprozeduren abgebenden bzw. aufnehmenden Teilnehmerstellen einer Datenvermittlungsanlage bekannt (DE-A-3 207 265). Bei diesem bekannten Verfahren werden die an einer Verbindung beteiligten Teilnehmerstellen über einen ebenfalls an der Datenvermittlungsanlage angeschlossenen Signalumsetzer miteinander verbunden. Bei einer derartigen Verbindung werden zunächst im Zuge einer zwischen der rufenden Teilnehmereinrichtung, von der der Aufbau dieser Verbindung ausgeht, und dem Signalumsetzer bestehenden ersten Teilverbindung die zu übertragenden Datensignale in diesen Signalumsetzer eingespeichert. Anschließend werden nach einer entsprechenden Umsetzung die in dem Signalumsetzer gespeicherten Datensignale von diesem im Zuge einer zweiten Teilverbindung über die Datenvermittlungsanlage an die gerufene Teilnehmereinrichtung weitergeleitet. Die Einbeziehung eines solchen Signalumsetzers in eine derartige Verbindung wird von der Datenvermittlungsanlage auf ein von der rufenden Teilnehmereinrichtung abgegebenes Steuersignal hin bewirkt. Die bei dem bekannten Verfahren vorgesehenen Verfahrensschritte dienen zum Ermitteln der Dauer des Bestehens einer aus zwei Teilverbindungen zusammengesetzten Verbindung. Ein Übertragen von in der Datenvermittlungsanlage bezüglich der Dauer des Bestehens dieser beiden Teilverbindungen ermittelten Angaben zu der rufenden Teilnehmereinrichtung hin ist bei dem bekannten Verfahren nicht vorgesehen. Es ist nun bereits ein Verfahren zum Gebührenzuschreiben bekannt (CCITT-Empfehlung X.21). Bei diesem Verfahren ist vorgesenen, daß nach dem Auslösen einer Verbindung innerhalb einer vorgegebenen Zeitspanne die für diese Verbindung entstandenen Gebühren der rufenden Teilnehmerstelle zuzuschreiben sind, falls ein derartiges Zuschreiben von der rufenden Teilnehmerstelle gefordert worden ist. Eine Anwendung dieses bekannten Verfahrens bei einer aus zwei Teilverbindungen bestehenden Verbindung würde dazu führen, daß bereits nach dem Auslösen der ersten der beiden Teilverbindungen ein Zuschreiben der Gebührendaten erfolgen würde.

Da innerhalb dieser vorgegebenen Zeitspanne die dem Signalumsetzer zugeführten Datensignale bei den üblicherweise verwendeten Datenübertragungsgeschwindigkeiten nicht umgesetzt und an die gerufene Teilnehmerstelle weitergeleitet werden können, würde lediglich ein Teil der tatsächlich anfallenden Gebühren, nämlich der auf die erste Teilverbindung entfallende Teil, innerhalb der vorgegebenen Zeitspanne zu der rufenden Teilnehmerstelle hin übertragen werden können. Der auf die zweite, noch nicht ausgelöste Teilverbindung entfallende Gebührenanteil kann innerhalb der vorgegebenen Zeitspanne nicht übertragen werden.

Der Erfindung liegt nun die Aufgabe zugrunde, einen Weg zu zeigen, wie bei einem Verfahren der eingangs genannten Art Angaben bezüglich der Dauer des Bestehens einer aus mehreren Teilverbindungen bestehenden Verbindung mit einem geringen Steuerungsaufwand zu der rufenden Teilnehmereinrichtung hin übertragen werden können.

Gelöst wird die vorstehend aufgezeigte Aufgabe bei einem Verfahren der eingangs genannten Art erfindungsgemäß dadurch, daß das von der rufenden Teilnehmereinrichtung abgegebene, die Einbeziehung eines Signalumsetzers in eine Verbindung bewirkende Steuersignal zusammen mit einem das Übertragen von Angaben bezüglich der Dauer des Bestehens der genannten Teilverbindungen fordernden Zuschreibsignal in der Fernschreib- und Datenvermittlungsanlage gespeichert wird, daß in der Fernschreib- und Datenvermittlungsanlage nach Abbau der ersten der beiden Teilverbindungen bezüglich der Dauer des Bestehens dieser Teilverbindungen ermittelte Angaben auf das Steuersignal hin zunächst gespeichert werden und daß diese Angaben zusammen mit den nach Abbau der zweiten Teilverbindung bezüglich der Dauer des Bestehens dieser zweiten Teilverbindung ermittelten Angaben unter Steuerung durch das gespeicherte Zuschreibsignal im Zuge einer für die Übertragung der für die beiden Teilverbindungen ermittelten Angaben dienenden gesonderten Verbindung zu der rufenden Teilnehmereinrichtung hin übertragen werden.

Die Erfindung bringt den Vorteil mit sich, daß Angaben bezüglich der Dauer des Bestehens einer aus mehreren Teilverbindungen zusammengesetzten Verbindung erst dann zu der rufenden Teilnehmereinrichtung hin übertragen werden, wenn auch die letzte der zu der Verbindung gehörenden Teilverbindungen zustande gekommen und wieder ausgelöst ist und Angaben bezüglich der Dauer des Bestehens dieser Teilverbindung ermittelt worden sind. Auf diese Weise erhält die rufende Teilnehmereinrichtung Angaben zugeführt, in denen die Dauer des Bestehens sämtlicher Teilverbindungen berücksichtigt ist. Bei diesen Angaben kann es sich dabei um Zeitangaben und/oder um den Zeitangaben entsprechende Gebührenangaben handeln.

Zweckmäßige Ausgestaltungen der Erfindung ergeben sich aus den Unteransprüchen.

Im folgenden wird die Erfindung anhand von Zeichnungen beispielsweise näher beschrieben.

Fig. 1 zeigt in einem Blockschaltbild eine Schaltungsanordnung, bei der die Erfindung angewandt ist,

Fig. 2 zeigt ein Diagramm, auf das im Zuge der Erläuterung der Erfindung eingegangen wird.

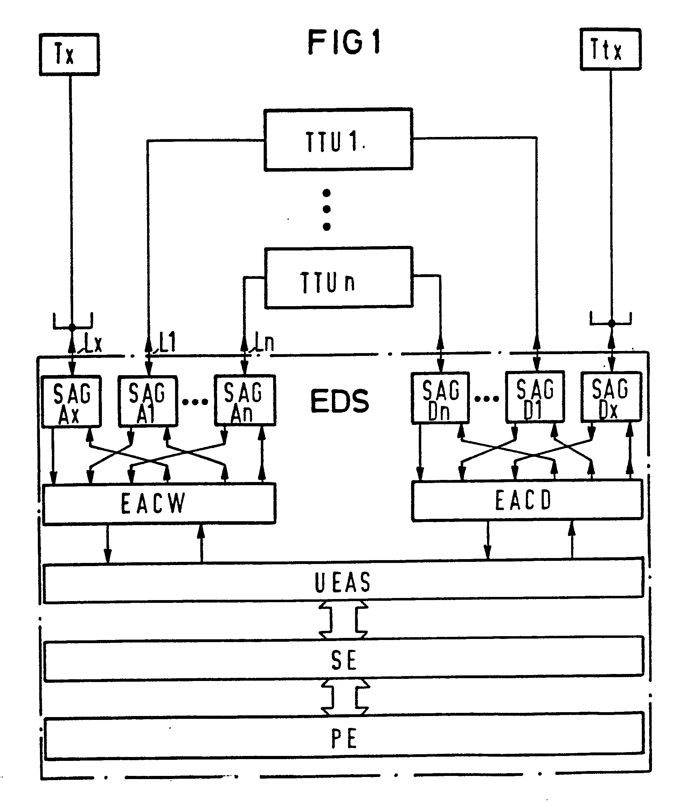

In Fig. 1 ist ausschnittweise eine elektronische Fernschreib- und Datenvermittlungsanlage EDS dargestellt. Von dieser Fernschreib- und Datenvermittlungsanlage EDS sind lediglich zu einer ersten Gruppe von Anschlußschaltungen gehörende Anschlußschaltungen SAGAx, SAGA1 bis SAGAn, zu einer zweiten Gruppe von Anschlußschaltungen gehörende Anschlußschaltungen SAGDx, SAGD1 bis SAGDn, den einzelnen Gruppen von Anschlußschaltungen zugehörige Eingabe-/Ausgabe-Codewandler EACW bzw. EACD, eine Übertragungsablaufsteuerung UEAS, eine Speichereinheit SE- und eine Programmsteuereinheit PE angedeutet. Die mit dem Eingabe-/Ausgabe-Codewandler EACW verbundenen Anschlußschaltungen dienen dazu, digitale Datensignale polaritätswechselweise zu verarbeiten. Die mit dem anderen Eingabe-/Ausgabe-Codewandler EACW verbundenen Anschlußschaltungen dienen zur Verarbeitung von sogenannten Bitgruppen, die auch als Envelopes bezeichnet werden. Diese Bitgruppen stellen digitale Datensignale dar, die jeweils eine Mehrzahl von Bits umfassen.

Die Aufgabe der genannten Eingabe-/Ausgabe-Codewandler besteht unter anderem darin, über die einzelnen Anschlußschaltungen zugeführte Signale zu dem eigentlichen Verarbeitungsteil der Fernschreib- und Datenvermittlungsanlage EDS weiterzuleiten bzw. von diesem Verarbeitungsteil her über die Anschlußschaltungen abzugebende Signale weiterzuleiten. Die Eingabe-/Ausgabe-Codewandler sind hierzu mit der Übertragungsablaufsteuerung UEAS verbunden. Diese Übertragungsablaufsteuerung steuert den Signalaustausch zwischen den Eingabe-/Ausgabe-Codewandlern und der Speichereinheit SE, die die ihr von der Übertragungsablaufsteuerung zugeführten Signale an die Programmsteuereinheit PE weiterleitet. Außerdem gibt die Speichereinheit SE die ihr von der Programmsteuereinheit zugeführten Signale an die Übertragungsablaufsteuerung UEAS ab.

Von den in Fig. 1 angedeuteten Anschlußschaltungen sind einige der Polaritätswechsel verarbeitenden Anschlußschaltungen mit Teilnehmereinrichtungen verbunden, welche digitale Datensignale mit einer ersten Datenübertragungsprozedur abgeben bzw. aufnehmen. Bei diesen Teilnehmereinrichtungen mag es sich um übliche Fernschreib- bzw. Telex-Endgeräte handeln, von denen in der Zeichnung eines mit Tx angedeutet ist. Diese Telex-Endgeräte mögen mit einer Datenübertragungsrate von 50 Bd und unter Ausnutzung des internationalen Telegraphenalphabets Nr. 2 arbeiten, also mit einem Start-Stop-Datenformat. Das Telex-Endgerät Tx ist über eine Leitung Lx an der Anschlußschaltung SAGAx angeschlossen. Ein auf dieser Leitung Lx eingetragenes Vielfachzeichen soll andeuten, daß an der betreffenden Amschlußschaltung SAGAx noch mehrere Telex-Endgeräte angeschlossen sein können.

Mit einigen der digitale Datensignale in Form von Bitgruppen bzw. Envelopes verarbeitenden Anschlußschaltungen sind Teilnehmereinrichtungen verbunden, die digitale Nachrichtensignale mit einer zweiten Datenübertragungsprozedur abgeben bzw. aufnehmen, und zwar seriell in Form von Bitgruppen bzw. Envelopes. Bei diesen Teilnehmereinrichtungen mag es sich um sogenannte Bürofernschreibstationen handeln, die auch als Teletex-Endgeräte bezeichnet werden. In Fig. 1 ist ein derartiges Teletex-Endgerät mit Ttx bezeichnet. Dieses Teletex-Endgerät ist an der Anschlußschaltung SAGDx angeschlossen. Ein auf der betreffenden Verbindungsleitung eingetragenes Vielfachzeichen soll hierbei wieder andeuten, daß an der betreffenden Anschlußschaltung SAGDx noch mehrere Teletex-Endgeräte angeschlossen sein können. Bezüglich der Teletex-Endgeräte sei angemerkt, daß diese beispielsweise seriell auftretende digitale Datensignale entsprechend dem internationalen Alphabet IA Nr. 5 mit einer Datenübertragungsrate von 2400 bit/s abgeben und aufnehmen können, und zwar als synchrone Datensignale.

Mit der in Fig. 1 dargestellten Fernschreib- und Datenvermittlungsanlage EDS ist eine Anzahl von Signalumsetzern TTU1 bis TTUn verbunden. Von diesen Signalumsetzern sind in Fig. 1 lediglich die Signalumsetzer TTU1 und TTUn dargestellt. Der Aufbau dieser Signalumsetzer ist in dem Patent DE-A-2 912 649 bereits beschrieben worden; er wird daher hier nicht näher erläutert. Der Signalumsetzer TTU1 ist über eine Leitung L1 sowohl sendeseitig als auch empfangsseitig mit der Anschlußschaltung SAGA1 verbunden. In entsprechender Weise ist der Signalumsetzer TTUn über die Leitung Ln mit der Anschlußschaltung SAGAn verbunden. Mit weiteren Signaleingängen/Signalausgängen sind die betreffenden Signalumsetzer über Leitungen mit den Anschlußschaltungen SAGD1 bzw. SAGDn verbunden. Über die erwähnten Leitungen nehmen die Signalumsetzer die jeweils hinsichtlich der Übertragunsprozedur umzusetzenden digitalen Datensignale auf bzw. geben die jeweils umgesetzten digitalen Datensignale ab. Dies bedeutet, daß die Signalumsetzer die ihnen zugeführtn Telexsignale in in den Teletex-Endgeräten wiedergebbare digitale Signale umsetzen und von den Teletex-Endgeräten abgegebene digitale Signale in Telex-Signale umsetzen.

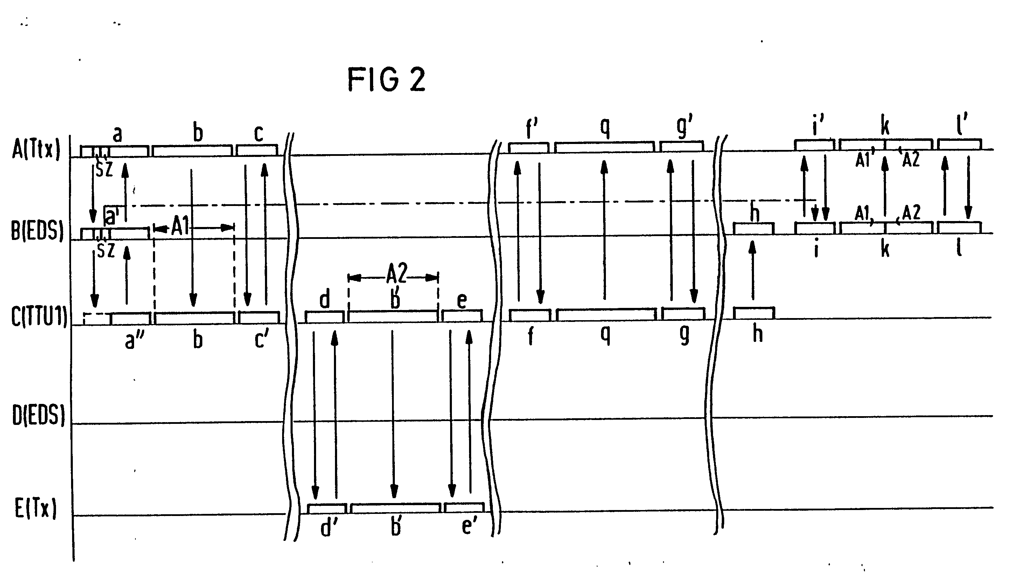

Nunmehr sei das Verfahren gemäß der Erfindung unter Bezugnahme auf die in Fig. 1 dargestellte Schaltungsanordnung und unter Heranziehung des Diagramms gemäß Fig. 2 näher erläutert. Hierzu wird beispielsweise der Fall betrachtet, daß Datensignale von dem Teletex-Endgerät Ttx zu dem Telex-Endgerät Tx zu übertragen sind. Die dabei für einen Verbindungsaufbau erforderlichen Kommunikationen zwischem dem Teletex-Endgerät Ttx und der Fernschreib- und Datenvermittlungsanlage EDS werden entsprechend der CCITT-Empfehlung X.21 durchgeführt (a in Fig. 2A, a' in Fig. 2B). Aus einem im Zuge des Verbindungsaufbaues von dem Teletex- Endgerät her zusammen mit der eigentlichen Rufnummer übertragenen Steuersignal (Zugangskennziffer) geht hervor, daß eine Verbindung zu einem Telex-Endgerät Tx gewünscht ist, d.h. daß eine Umsetzung der Übertragungsprozedur vorzunehmen ist. Ein solches Steuersignal, das in Form eines Bits oder einer Bitkombination übertragen werden kann, wird in der Fernschreib- und Datenvermittlungsanlage EDS als solches erkannt. Bei Erkennen eines Steuersignals belegt die Fernschreib- und Datenvermittlungsanlage EDS einen bis dahin freien Sinalumsetzer TTU1 bis TTUn. Der Signalumsetzer TTU1 soll beispielsweise ein solcher freier Signalumsetzer sein.

Zusätzlich zu dem Steuersignal wird mit der Rufnummer noch ein Zuschreibsignal, das wiederum in Form eines Bits oder einer Bitkombination übertragen werden kann, von dem Teletex-Endgerät her an die Fernschreib- und Datenvermittlumgsanlage EDS abgegeben.

Dieses Zuschreibsignal gibt an, daß in der Fernschreib- und Datenvermittlungsanlage bezüglich der Dauer des Bestehens der von dem Teletex-Endgerät gewünschten Verbindung ermittelte Angaben zu dem Teletex-Endgerät hin zu übertragen sind. Dieses Teletex-Endgerät stellt für die hier aufzubauende Verbindung die rufende Teilnehmereinrichtung dar. Das Zuschreibsignal und das zuvor erwähnte Steuersignal werden in der Fernschreib- und Datenvermittlungsanlage zwischengespeichert. Diese beiden Signale sind in Fig. 2A und 2B mit S bzw. mit Z angedeutet. S soll dabei das Steuersignal und Z das Zuschreibsignal darstellen.

Nach der Belegung des Signalumsetzers TTU1 auf ein empfangenes Steuersignal hin leitet die Fernschreib- und Datenvermittlungsanlage EDS die für den weiteren Verbindungsaufbau erforderlichen Signalisierungsinformationen (z. B. Wahlinformationen) an den Signalumsetzer TTU1 weiter. Die Weiterleitung solcher Signalisierungsinformationen erfolgt dabei gemäß der CCITT-Empfehlung X.71 (a'' in Fig. 2C). Nach einem erfolgten Aufbau der Verbindung zwischen dem Signalumsetzer und dem Teletex-Endgerät beginnt das Teletex-Endgerät Ttx mit der Übertragung der Datensignale über die Fernschreib- und Datenvermittlungsanlage EDS zum Signalumsetzer TTU1 (b in Fig. 2A und 2C). Gleichzeitig mit dieser Übertragung ermittelt die Fernschreib- und Datenvermittlungsanlage EDS die Dauer des Bestehens der Verbindung zwischen dem Teletex-Endgerät Ttx und dem Signalumsetzer TTU1 und zeichnet die Angaben bezüglich dieser Dauer für eine spätere Übertragung zu dem Teletex-Endgerät hin auf. Diese Aufzeichnung erfolgt auf das in der Fernschreib- und Datenvermittlungsanlage gespeicherte Steuersignal hin. Die Ermittlung der Angaben bezuglich der Dauer der gerade erwähnten Verbindung (erste Teilverbindung) ist in Fig. 2B mit A1 angedeutet.

In dem Signalumsetzer TTU1 sind nun Speicherzellen reserviert, in denen die zu übertragenden Datensignale zur Umsetzung in entsprechende Telexsignale zwischengespeichert werden. Nach Abschluß der Übertragung der genannten Datensignale von dem Teletex-Endgerät Ttx zu dem Signalumsetzer TTU1 hin wird die zwischen dem Teletex-Endgerät und diesem Signalumsetzer bestehende Verbindung von dem Teletex-Endgerät her in bekannter Weise abgebaut (c in Fig. 2A und c' in Fig. 2C).

Nach dem gerade genanntem Abbau der Verbindung zwischen dem Teletex-Endgerät Ttx und dem Signalumsetzer TTU1 baut der Signalumsetzer nunmehr eine Verbindung zu dem Telex-Endgerät Tx hin auf (d in Fig. 2C und d' in Fig. 2E). Nach einem erfolgten Aufbau beginnt der Signalumsetzer mit dem Auslesen und Umsetzen der zuvor in den Speicherzellen zwischengespeicherten Datensignale und leitet die umgesetzten Datensignale gemäß der zu verwendenden Übertragungsprozedur an das Telex-Endgerät Tx weiter (b' in Fig. 2C und 2E).

Mit dem Weiterleiten der Datensignale beginnt der Signalumsetzer, die Dauer der für das Weiterleiten der Datensignale erforderlichen Zeitspanne zu ermitteln. Zur Markierung des Anfangszeitpunktes wird hierzu der Zählerstand einer in dem Signalumsetzer TTU1 sich befindenden Zähleinrichtung verwendet, die entweder durch einen internen Systemtakt oder durch einen von dem Vermittlungsnetz her bereitgestellten Netztakt, z. B. den Envelopetakt, steuerbar ist. Bei dem hier vorliegenden Ausführungsbeispiel wird der Zählerstand der genannten Zähleinrichtung im zeitlichen Abstand von 0,1 s jeweils inkrementiert. Mit dem Abschluß des Weiterleitens der genannten Datensignale ermittelt der Signalumsetzer TTU1 anhand des aktuellen Zählerstandes und des zuvor registrierten Anfangszählerstandes die Dauer, die für das Weiterleiten der Datensignale erforderlich gewesen ist, und speichert die Angaben bezüglich dieser Zeitspanne bis zur Übergabe an die Fernschreib- und Datenvermittlungsanlage EDS in einem dafür vorgesehen Speicherbereich des Signalumsetzers. Die Ermittlung der Angaben bezüglich der für das Weiterleiten der Datensignale erforderlichen Zeitspanne ist in Fig. 2C durch A2 angedeutet. Im Anschluß an das Weiterleiten der Datensignale wird die über die Fernschreib- und Datenvermittlungsanlage EDS zwischen dem Signalumsetzer TTU1 und dem Telex-Endgerät Tx bestehende Verbindung abgebaut (e in Fig. 2C und e' in Fig. 2E). Der Verbindungsabbau wird dabei von dem Signalumsetzer eingeleitet.

Nach dem vollständigen Abbau der zuvor genannten Verbindung wird von dem Signalumsetzer TTU1 aus erneut eine Verbindung zu dem Teletex-Endgerät Ttx aufgebaut. Diese erneut aufgebaute Verbindung dient lediglich dazu, dem betreffenden Teletex-Endgerät das ordnungsgemäße Weiterleiten der Datensignale an das Telex-Endgerät zu quittieren (Quittungsruf). Dieser Quittungsruf ist in Fig. 2C durch die Felder f (Verbindungsaufbau), q (Quittungsübertragung), g (Verbindungsabbau) und in Fig. 2A durch die entsprechenden Felder f', q, g' angedeutet. Die Dauer des Bestehens dieser für den Quittungsruf erforderlichen Verbindung kann wiederum in der Fernschreib- und Datenvermittlungsanlage EDS in bereits dargestellter Weise ermittelt werden. Inwieweit diese Verbindungsdauer für die Gebühren erfaßt wird, hängt dabei von dem jeweiligen Betreiber der Fernschreib- und Datenvermittlungsanlage ab. Im übrigen sei darauf hingewiesen, daß im Zuge der einzelnen zwischen dem Signalumsetzer und dem Teletex-Endgerät bzw. dem Telex-Endgerät bestehenden Verbindungen Kennungen in hier nicht näher dargestellter Weise ausgeteuscht werden.

Nach Abschluß des genannten Quittungsrufes ist der Signalumsetzer TTU1 durch die Fernschreib- und Datenvermittlungsanlage EDS für weitere Umsetzvorgänge wieder belegbar. Um dies der Fernschreib- und Datenvermittlungsanlage anzuzeigen, übergibt der Signalumsetzer TTU1 ein seine Wiederbelegbarkeit kennzeichnende Signal an diese ab. Mit diesem die Wiederbelegbarkeit des Signalumsetzers kennzeichnenden Signal werden gleichzeitig die bis dahin in dem Signalumsetzer TTU1 gespeicherten Angaben bezüglich der für das Weiterleiten der Datensignale an das Telex-Endgerät Tx erforderlichen Zeitspanne an die Fernschreib- und Datenvermittlungsanlage EDS übergeben (h in Fig. 2C und 2B).

Die von dem Signalumsetzer TTU1 übergebenen Angaben bezüglich der Dauer des Bestehens der zu dem Telex-Endgerät hin verlaufenden Verbindung werden in der Fernschreib- und Datenvermittlungsanlage EDS mit den zuvor in dieser registrierten Angaben für eine Übertragung zu dem Teletex-Endgerät hin zusammengefaßt. Diese Zusammenfassung kann dabei in der Weise erfolgen, daß entweder aus den einzelnen Angaben eine Gesamtverbindungsdauer der zwischen dem Signalumsetzer TTU1 und den beiden Endgeräten bestehenden Verbindungen ermittelt wird oder daß die einzelnen Angaben für eine Übertragung zu dem Teletex-Endgerät hin lediglich aufgesammelt werden. In beiden Fällen können die zu dem Teletex-Endgerät hin zu übertragenden Angaben so aufbereitet werden, daß aus ihnen die für die zwischen dem Teletex-Endgerät und dem Telex-Endgerät verlaufende, aus mehreren Teilverbindungen bestehende Verbindung erforderliche Zeit und/oder die für die Verbindung zu entrichtenden Gebühren hervorgehen. Die Gebührenermittlung erfolgt dabei gegebenenfalls unter Berücksichtigung der auf den Übertragungswegen von bzw. zu dem Signalumsetzer hin benutzten Übertragungsgeschwindigkeiten.

Nachdem die bezüglich der Dauer des Bestehens der zwischen den beiden Endgeräten und dem Signalumsetzer TTU1 verlaufenden Verbindungen (Teilverbindungen) ermittelten Angaben in der gerade dargestellten Weise aufbereitet worden sind, wird von der Fernschreib- und Datenvermittlungsanlage EDS aufgrund des bereits erwähnten, in der Fernschreib- und Datenvermittlungsanlage zwischengespeicherten Zuschreibsignals erneut eine Verbindung zu dem Teletex-Endgerät hin aufgebaut (i in Fig. 28 und i' in Fig. 2A). Die Steuerung dieses Verbindungsaufbaues durch das Zuschreibsignal ist in Fig. 2b durch die strichpunktierte Linie angedeutet. Nach dem Aufbau dieser Verbindung werden dann die in der Fernschreib- und Datenvermittlungsanlage EDS aufbereiteten Angaben zu dem Teletex-Endgerät Ttx hin übertragen (k in Fig. 2A und 2B). In den Fig. 2A und 2B ist dabei unter k mit A1 und A2 angedeutet, daß die aus den zwischen den beiden Endgeräten und dem Signalumsetzer bestehenden Verbindungen resultierenden Angaben zusammengefaßt übertragen werden. Nach der vollständigen Übertragung der in der Fernschreib- und Datenvermittlungsanlage aufbereiteten Angaben wird die Verbindung von der Fernschreib- und Datenvermittlungsanlage her in bekannter Weise abgebaut (l in Fig. 2B und l' in Fig. 2A).

Die in der Ferschreib- und Datenvermittlungsanlage EDS aufbereiteten Angaben bezüglich der Dauer des Bestehens der Teilverbindungen können aber auch im Zuge des in Fig. 2B mit i bezeichneten Verbindungsaufbaues zu dem Teletex-Endgerät Ttx hin übertragen werden. In diesem Fall würde dann die in Fig. 2A und 2B angegebene Übertragungsphase k entfallen. Die Fernschreib- und Datenvermittlungsanlage löst nach der vollständigen Übertragung der Angaben noch vor dem Übergang in die Übertragungsphase die Verbindung wieder aus.

Abschließend sei hier noch darauf hingewiesen, daß das Prinzip der Erfindung im Zusammenhang mit einer Fernschreib- und Datenvermittlungsanlage erläutert worden ist, an die die beiden an einer Verbindung beteiligten Endgeräte angeschlossen sind. Dieses Prinzip ist aber auch ohne weiteres bei einer Fernschreib- und Datenvermittlungseinrichtung anwendbar, bei der die rufende Teilnehmereinrichtung und der erwähnte Signalumsetzer an einer ersten Fernschreib- und Datenvermittlungsanlage und die gerufene Teilnehmereinrichtung an einer zweiten, mit der ersten über Verbindungsleitungen verbundenen Fernschreib- und Datenvermittlungsanlage angeschlossen sind.

**Patentansprüche**

1. Verfahren zum Übertragen von in einer Fernschreib- und Datenvermittlungsanlage (EDS) bezüglich der Dauer des Bestehens einer Verbindung ermittelten Angaben zu der an dieser Verbindung beteiligten rufenden Teilnehmereinrichtung (Ttx) hin, von der der Aufbau dieser Verbindung ausgeht und die mit der an dieser Verbindung beteiligten gerufenen, Datensignale mit einer gegenüber der rufenden Teilnehmereinrichtung verschiedenen Datenübertragungsprozedur abgebenden bzw. aufnehmenden Teilnehmereinrichtung (Tx) über einen an der Fernschreib- und Datenvermittlungsanlage angeschlossenen Signalumsetzer (z. B. TTU1) dadurch verbunden wird, daß zunächst im Zuge einer zwischen der rufenden Teilnehmereinrichtung und dem Signalumsetzer bestehenden ersten Teilverbindung die zu übertragenden Datensignale in diesem Signalumsetzer eingespeichert werden und daß anschließend nach einer Umsetzung die in dem Signalumsetzer gespeicherten Datensignale von diesem im Zuge einer zweiten Teilverbindung über die Fernschreib- und Datenvermittlungsanlage an die gerufene Teilnehmereinrichtung weitergeleitet werden, wobei die Einbeziehung dieses Signalumsetzers in die betreffende Verbindung von der Fernschreib- und Datenvermittlungsanlage auf ein von der rufenden Teilnehmereinrichtung abgegebenes Steuersignal hin bewirkt wird, dadurch gekennzeichnet, daß das von der rufenden Teilnehmereinrichtung (Ttx) abgegebene, die Einbeziehung eines Signalumsetzers (TTU1) in eine Verbindung bewirkende Steuersignal zusammen mit einem das Übertragen von Angaben bezüglich der Dauer des Bestehens der genannten Teilverbindungen fordernden Zuschreibsignal in der Fernschreib- und Datenvermittlungsanlage (EDS) gespeichert wird, daß in der Fernschreib- und Datenvermittlungsanlage nach Abbau der ersten der beiden Teilverbindungen bezüglich der Dauer des Bestehens dieser Teilverbindung ermittelte Angaben auf das gespeicherte Steuersignal hin zunächst zwischengespeichert werden, und daß diese Angaben zusammen mit den nach Abbau der zweiten Teilverbindung bezüglich der Dauer des Bestehens dieser zweiten Teilverbindung ermittelten Angaben unter Steuerung durch das gespeicherte Zuschreibsignal im Zuge einer für die die für die beiden Teilverbindungen ermittelten Angaben dienenden gesonderten Verbindung zu der rufenden Teilnehmereinrichtung hin übertragen werden.

2. Verfahren nach Anspruch 1, dadurch gekennzeichnet, daß das Steuersignal und das Zuschreibsignal jeweils in Form von mindestens einem Bit übertragen werden.

3. Verfahren nach Anspruch 1, oder 2, dadurch gekennzeichnet, daß die Angaben bezüglich der Dauer des Bestehens der zweiten Teilverbindung in dem in diese Teilverbindung einbezogenen Signalumsetzer ermittelt werden.

4. Verfahren nach einem der Ansprüche 1 bis 5, dadurch gekennzeichnet, daß als Angaben bezüglich der Dauer des Bestehens der beiden Teilverbindungen Zeitangaben ermittelt werden.

5. Verfahren nach einem der Ansprüche 1 bis 4, dadurch gekennzeichnet, daß als Angaben bezüglich der Dauer des Bestehens der beiden Teilverbindungen die für diese Teilverbindungen zu entrichtenden Gebühren ermittelt werden.

**Claims**

1. Method for the transmission of data determined in a telegraph and data exchange (EDS) regarding the duration of the existence of a connection to the calling subscriber device (Ttx) which participates in this connection and initiates the establishment of this connection, and which is connected, via a signal converter (e.g. TTU1) connected to the telegraph and data exchange, to the subscriber device (Tx) which is called and participates in this connection and which outputs or receives data signals with a data transmission procedure different to that of the calling subscriber device, in such a manner that initially, in the course of a first partial connection existing between the calling subscriber device and the signal converter, the data signals to be transmitted are stored in this signal converter and that subsequently after a conversion the data signals stored in the signal converter are forwarded from said converter to the calling subscriber device in the course of a second partial connection via the telegraph and data exchange, the inclusion of this signal converter in the respective connection being effected by the telegraph and data exchange on account of a control signal output by the calling subscriber device, characterized in that the control signal which is output by the calling subscriber device (Ttx) and effecting the inclusion of a signal converter (TTU1) in a connection is stored in the telegraph and data exchange (EDS) together with an allocation signal requesting the transmission of data regarding the duration of the existence of said partial connections, in that, in the telegraph and data exchange after clearance of the first of the two partial connections, data determined regarding the duration of the existence of this partial connection are at first temporarily stored on account of the stored control signal, and in that these data, together with the data determined regarding the duration of the existence of this second partial connection after clearance of the second partial connection, are transmitted to the calling subscriber device under the control of the stored allocation signal in the course of a separate connection serving for the transmission of the data determined for the two partial connections.

2. Method according to Claim 1, characterized in that the control signal and the allocation signal are transmitted in each case in the form of at least one bit.

3. Method according to Claim 1 or 2, characterized in that the data regarding the duration of the existence of the second partial connection are dtermined in the signal converter included in this partial connection.

4. Method according to one of Claims 1 to 3, characterized in that time data are determined as data regarding the duration of the existence of the two partial connections.

5. Method according to one of Claims 1 to 4, characterized in that the charges to be levied for these partial connections are determined as data regarding the duration of the existence of the two partial connections.

**Revendications**

1. Procédé pour transmettre des indications déterminées dans une installation (EDS) de télex et de commutation de données et concernant la durée de l'existence d'une liaison, à un poste d'abonné appelant (Ttx) participant à cette liaison, à partir duquel s'effectue l'établissement de cette liaison et qui est relié au poste d'abonné appelé (Tx), participant à cette liaison et délivrant ou recevant les signaux de données selon une procédure de transmission de données différente par rapport au poste d'abonné appelant, par l'intermédiaire d'un convertisseur de signaux (par exemple TTU1) raccordé à l'installation de télex et de commutation de données, grâce au fait que tout d'abord, au cours d'une première liaison partielle existant entre le poste d'abonné appelant et le convertisseur de signaux, les signaux de données devant être transmis sont mémorisés dans ce convertisseur de signaux, et qu'ensuite, après une conversion, les signaux de données mémorisés dans le convertisseur de signaux sont retransmis, au cours d'une seconde liaison partielle, par l'intermédiaire de l'installation de télex et de commutation de données, au poste d'abonné appelé, l'insertion de ce convertisseur de signaux dans la liaison considérée étant réalisée par l'installation de télex et de commutation de données lors de l'apparition d'un signal de commande délivré par le poste d'abonné appelant, caractérisé par le fait que le signal de commande, qui est délivré par le poste d'abonné appelant (Ttx) et réalise l'insertion d'un convertisseur de signaux (TTU1) dans une liaison, est mémorisé, conjointement avec un signal d'imputation favorisant la transmission d'indications concernant la durée de l'existence desdites liaisons partielles, dans l'installation (EDS) de télex et de commutation de données, que dans cette installation de télex et de commutation de données, après suppression de la première des deux liaisons partielles, des indications établies en rapport avec la durée de l'existence de cette liaison partielle sont tout d'abord mémorisées temporairement lors de l'apparition du signal de commande mémorisé, et que ces indications sont transmises au dispositif d'abonné appelant, conjointement avec les indications établies après la suppression de la seconde liaison partielle et concernant la durée de l'existence de cette seconde liaison partielle, sous la commande du signal d'imputation mémorisé, au cours d'une liaison séparée utilisée pour transmettre les indications établies pour les deux liaisons partielles.

2. Procédé suivant la revendication 1, caractérisé par le fait que le signal de commande et le signal d'imputation sont transmis respectivement sous la forme d'au moins un bit.

3. Procédé suivant la revendication 1 ou 2, caractérisé par le fait que les indications concernant la durée de l'existence de la seconde liaison partielle sont déterminées dans le convertisseur de signaux inséré dans cette liaison partielle.

4. Procédé suivant l'une des revendications 1 à 3, caractérisé par le fait que des indications temporelles sont déterminées en tant qu'indications concernant la durée de l'existence des deux liaisons partielles.

5. Procédé suivant l'une des revendications 1 à 4, caractérisé par le fait que les taxes devant être payées pour ces deux liaisons partielles, sont déterminées en tant qu'indications concernant la durée de l'existence de ces deux liaisons.

8

# FIG 1

FIG 2

EP 0 144 583 B1